Europäisches Patentamt

European Patent Office

Office européen des brevets

(19)

(11) Veröffentlichungsnummer: **0 286 870 B1**

(12) **EUROPÄISCHE PATENTSCHRIFT**

(45) Veröffentlichungstag der Patentschrift: **03.07.91**    (51) Int. Cl.5: **C02F 1/78**

(21) Anmeldenummer: **88104533.0**

(22) Anmeldetag: **22.03.88**

(54) **System zur Wasseraufbereitung mit Ozon.**

(30) Priorität: 04.04.87 DE 3711407

(43) Veröffentlichungstag der Anmeldung:
19.10.88 Patentblatt 88/42

(45) Bekanntmachung des Hinweises auf die
Patenterteilung:
03.07.91 Patentblatt 91/27

(84) Benannte Vertragsstaaten:
DE ES FR GB IT

(56) Entgegenhaltungen:
DE-A- 2 231 025
DE-A- 2 511 499
GB-A- 1 366 594
US-A- 4 250 040

(73) Patentinhaber: **Bachhofer, Bruno**
**Säntisstrasse 85**
**W-7980 Ravensburg 1(DE)**

Patentinhaber: **Locher, Anton**
**Bergstrasse 6**
**W-7980 Ravensburg 1(DE)**

(72) Erfinder: **Bachhofer, Bruno**
**Säntisstrasse 85**
**W-7980 Ravensburg 1(DE)**
Erfinder: **Locher, Anton**
**Bergstrasse 6**
**W-7980 Ravensburg 1(DE)**

(74) Vertreter: **Patentanwälte Dipl.-Ing. E. Eisele**
**Dr.-Ing. H. Otten**
**Seestrasse 42**
**W-7980 Ravensburg(DE)**

## Beschreibung

Die Erfindung betrifft ein Wasseraufbereitungssystem mit einer Einrichtung zur intensiven Vorbehandlung des Rohwassers mit Ozon, mit einem anschließenden Filter, bestehend aus einem mit reduzierend wirkenden Filterstoffen teilweise gefüllten Filterbehälter, der von dem vorbehandelten Wasser von oben nach unten durchströmt wird, wobei das in dem Wasser enthaltene restliche Ozon abgebaut wird, und mit einer Einrichtung zur Nachbehandlung des Wassers mit Ozon zum Zwecke der Nachdesinfektion.

Ein Wasseraufbereitungssystem dieser Art für die Aufbereitung von Umwälzwasser in Badebekken ist aus der DE-A-2 231 025 bekannt. Dabei werden für die Vor- und Nachdesinfektion zwei einzelne Ozonerzeuger eingesetzt, was einen hohen technischen Aufwand erfordert und unwirtschaftlich ist.

Ein bevorzugtes Anwendungsgebiet der Erfindung ist die Trinkwasseraufbereitung, d. h. die Aufbereitung von organisch-biologisch belastetem Wasser, beispielsweise nahe der Erdoberfläche gefaßtem Grundwasser, zu für den Menschen genießbarem Wasser. Hierbei tritt die unwirtschaftliche doppelte Ozonerzeugerausstattung wegen des höheren Wasserdurchsatzes besonders deutlich in Erscheinung.

Es ist bekannt, organisch-biologisch belastetes Wasser zum Zwecke der Qualitätsverbesserung einer intensiven Oxidation mit Ozon zu unterwerfen. Je nach dem Grad der Belastung ist es auch bekannt, diese Rohwasserbehandlung mehrfach zu wiederholen, indem das Wasser in einer Schleife umgewälzt wird. Diese intensive Ozonbehandlung bewirkt durch Oxidation, daß Viren inaktiviert, Bakterien abgetötet, organische Substanzen zu Tochterprodukten reduziert sowie Kolloide zur Koagulation gebracht und damit filtrierbar gemacht werden.

Ist in dem Rohwasser Mangan enthalten, insbesondere in Form von braunen Manganoxiden, so werden diese bei hoher Ozonkonzentration zu Permanganaten aufoxidiert, die lösbar sind und daher nicht ausgefiltert werden können.

Es ist ferner bekannt, für das vorbehandelte Wasser reduzierend wirkende Filter zu verwenden, z. B. Mischbettfilter, die zum großen Teil aus verkokter Kohle verschiedener Granulierung bestehen. Hierbei wird das im Wasser vorhandene Ozon vollkommen beseitigt, das gelöste Permanganat wird zu Manganoxiden reduziert, welche ebenso wie die filtrierbaren organischen Bestandteile festgehalten werden. Allerdings hat man schon immer beobachtet, daß sich in den tieferen Filterschichten Bakterienkolonien bilden, von denen gelegentlich Keime mit dem Reinwasser ausgeschwemmt wurden. Man setzte deshalb die Nachdesinfektion als prophylaktische Maßnahme ein, versuchte jedoch, durch um so intensivere Voroxidation die organischen Substanzen soweit wie möglich zu mineralisieren.

Neuere Erkenntnisse haben gezeigt, daß es vorteilhafter ist, die Oxidation in der Vorbehandlungsstufe nicht zu weit zu treiben, so daß in größerem Umfang assimilierbare, d. h. als Nährstoff für Bakterien geeignete organische Substanzen entstehen. Dadurch bildet sich im reduktiv aufgebauten Filterbett ein diesen assimilierbaren Substanzen angepaßter aerober bakterieller Bewuchs, welcher seinerseits eine weitergehende Mineralisation und somit Reduktion der organischen Substanzen bewirkt. Das Ozon in der Vorbehandlungsstufe ist dabei einem Werkzeug vergleichbar, welches die organischen Substanzen lediglich aufschließt, um sie für die biologische Umwandlung im Filterbett geeignet zu machen. Die Vorbehandlung erfordert somit weniger Ozon.

Andererseits erhält die Nachdesinfektion erhöhte Bedeutung. Sie ist als Betriebsdesinfektion zu verstehen. Sie eliminiert zwangsweise die eventuell aus der Biomasse stammenden Keime und ermöglicht die Einstellung eines für die weitergehende Sicherung der Hygiene notwendigen Restozongehaltes im Reinwasser.

Der Erfindung liegt die Aufgabe zugrunde, ein in dieser Weise arbeitendes, besonders einfaches und wirkungsvolles System zur Wasseraufbereitung vorzuschlagen, das wirtschaftlich zu betreiben ist und das produzierte Ozon optimal nutzt.

Diese Aufgabe wird ausgehend von einem Wasseraufbereitungssystem der einleitend bezeichneten Art erfindungsgemäß dadurch gelöst, daß die im oberen Teil des Filterbehälters sich ansammelnde ozonhaltige Luft, deren Ozonanteil dem Wasser bei der Vorbehandlung beigemischt wurde, über eine Entnahmeleitung in die Einrichtung zur Nachbehandlung des gefilterten Wassers eingespeist wird und daß eine Niveauregeleinrichtung für das Wasser in dem Mischbettfilter vorgesehen ist, welche die Entnahmeleitung sperrt, wenn das Wasser über einen bestimmten Niveau-Grenzwert ansteigt, so daß das überschüssige Ozon dem Filterbehälter wasserfrei entnommen wird. Als Niveauregeleinrichtung eignet sich insbesondere eine in zwei Komponenten getrennte, deren Regelventil außerhalb des Filterbehälters in die Entnahmeleitung eingebaut ist, während eine in den Behälter eingebaute Niveausonde das Regelventil beeinflußt.

Obwohl nach diesem Vorschlag nur ein Ozonerzeuger vorgesehen ist, wird ohne Rohrleitungssystem und ohne Ozonverluste an zwei Stellen ozoniertes Gas mit unterschiedlicher Ozonkonzentration zur Verfügung gestellt, wobei die Ozonkonzentration dem jeweiligen Bedarf entspricht. Für die Ozonvorbehandlung ist eine möglichst hohe Ozonkonzentration erforderlich, da das Rohwasser stark mit organischen Stoffen belastet ist. Für die Nachbehandlung genügt dagegen eine geringe Ozonkonzentration, denn das gefilterte Wasser ist fast sauber und verbraucht somit nur wenig Ozon. Die Verwendung des gesamten erzeugten Ozons hoher Konzentration zur Vorbehandlung deckt den Bedarf an dieser Stelle, während das Restozon geringer Konzentration, das sich im oberen Teil des Filterbehälters ansammelt, für die Nachdesinfektion ausreicht.

Die Erfindung ist von besonderer praktischer Bedeutung, wenn der Ozonerzeuger, wie aus der DE-A1 2 511 499 bekannt, in das Prozeßwasser eingetaucht ist und eine bauliche Einheit mit einem Mischer bildet, wobei alles erzeugte Ozongas unmittelbar in das Wasser eingebracht wird. Hierbei bestünden große Schwierigkeiten, einen Teil des Ozons für die Nachdesinfektion abzuzweigen, ganz abgesehen von den Ozonverlusten durch Zerfall auf der Leitungsstrecke. Erfindungsgemäß wird dagegen der ohnehin vorhandene Ozonüberschuß für die Nachdesinfektion genutzt.

Das Überschußozon soll dem oberen Teil des Filterbehälters wasserfrei, d. h. vom Wasser getrennt und allenfalls mit Luft vermischt entnommen werden. Dies ist deshalb erforderlich, weil sich an der Entnahmestelle die vom Filter zurückgehaltenen Schmutzbestandteile ansammeln und somit das Wasser stark verunreinigt ist. Die Entnahme wasserfreien Gases wird dadurch erreicht, daß oben am Filterbehälter eine Entnahmeleitung für die dort befindliche ozonhaltige Luft angeschlossen ist und daß in dem Filterbehälter eine Niveausonde eingebaut ist, welche mittels eines Regelventils die Entnahmeleitung sperrt, wenn das Wasserniveau über einen bestimmten Grenzwert ansteigt.

Dadurch ist sichergestellt, daß ein Gaskissen ausreichender Höhe in dem Filterbehälter aufrecht erhalten bleibt und kein verschmutztes Wasser in die Entnahmeleitung eintreten kann.

Es wird vorgeschlagen, daß als Einrichtung zur Nachbehandlung des gefilterten Wassers ein längliches Standgefäß vorgesehen ist, welches mit chemisch beständigen, ein geringes Volumen und eine große Oberfläche aufweisenden Füllkörpern gefüllt ist, und daß das gefilterte Wasser oben in das Standgefäß eingeleitet und unten entnommen wird, so daß es über die Füllkörper rieselt, und die ozonhaltige Luft in das Standgefäß eingeleitet und die Abluft über ein Aktivkohlefilter ausgeleitet wird. Das Ozon-Luft-Gemisch kann unmittelbar in das Standgefäß oder kurz zuvor in das Reinwasser eingeleitet werden, welches oben in das Standgefäß einfließt oder vorzugsweise versprüht wird, so daß sich eine möglichst lange Verweilzeit in der ozonhaltigen Luft ergibt. Aus dem gleichen Grund wird das Wasserniveau in dem Standgefäß mittels eines Niveauregelventils, welches die Abluftleitung ab einem bestimmten Wasserniveau sperrt, konstant gehalten.

Es ist zweckmäßig, das Rohwasser in der Vorbehandlungseinrichtung mehrfach umzuwälzen und erst dann mit dem eingebrachten überschüssigen Ozon-Luft-Gemisch zusammen in den Filterbehälter zu bringen. Dazu wird vorgeschlagen, daß die Einrichtung zur Vorbehandlung des Rohwassers ein Reaktionsgefäß umfaßt, das im oberen Teil einen Mischer und etwa in halber Höhe einen Auslaß für das zu dem Filterbehälter fließende Wasser-Ozon-Luft-Gemisch aufweist, während das Wasser vom Boden des Reaktionsgefäßes über einen Rückführzweig einer in den Mischer einspeisenden Umwälzpumpe zufließt. Im Betrieb bildet sich in dem Reaktionsgefäß bis zum Auslaßstutzen herunter ein Gaspolster aus und überschüssiges Gas wird von dem ausströmendem Wasser zum Filter mitgerissen.

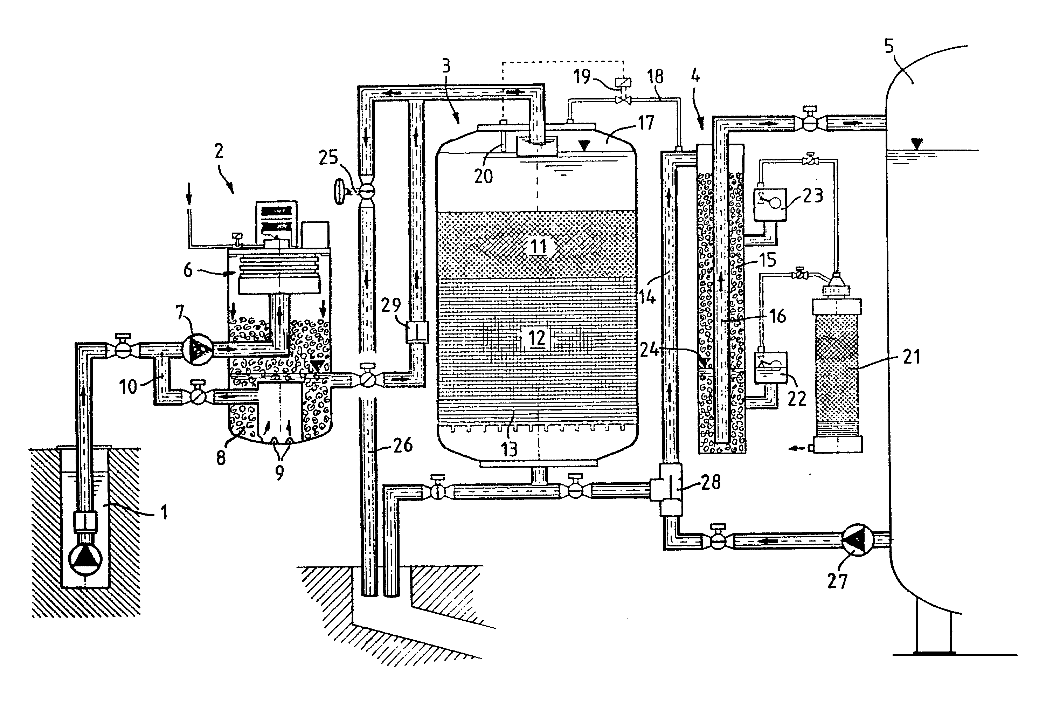

Ein Ausführungsbeispiel der Erfindung wird nachfolgend anhand des in der einzigen Figur dargestellten Schemas eines Trinkwasser-Aufbereitungssystems näher erläutert.

Das Rohwasser wird einem Brunnen (1) entnommen, einer Vorbehandlungseinrichtung (2) zugeführt, in einem Mischbettfilter (3) gefiltert, in einer Füllkörpersäule (4) nachbehandelt und dann in einem Lagerbehälter (5) gesammelt.

Die Vorbehandlungseinrichtung (2) enthält einen Ozongenerator und eine Ozon/Wasser-Mischkammer, die zu einem Modul (6) zusammengefaßt sind. Der stufenlos einstellbare Ozongenerator liefert bis zu 55 g Ozon je Stunde. Die erreichbare Ozonkonzentration in der Gasphase vor der Einleitung in das Wasser beträgt bis zu 50 g Ozon je Normalkubikmeter Luft. Der Ozongenerator ist in einer Stapelkonstruktion aus horizontalen Platten ausgeführt und am Deckel des Reaktionsgefäßes aufgehängt. Darunter befindet sich die Mischeinrichtung.

Das Reaktionsgefäß ist zum größten Teil mit Füllkörpern (8) gefüllt, die aus Edelstahl-Blech gestanzt und zu einer kugelförmigen Außenform von etwa 5 cm Durchmesser zusammengeknüllt sind. Etwa in halber Höhe dieser Füllkörperschicht sitzt am Mantel des Reaktionsgefäßes ein Auslaßstutzen, von dem aus eine Leitung zu dem Mischbettfilter (3) führt. Eine Umwälzpumpe (7) drückt das Rohwasser von unten in den Modul (6), an dessen Umfang es wieder austritt. Das Wasser fällt dann durch die Füllkörperschicht (8) nach unten und tritt durch Aussparungen (9) am unteren Rand eines Innenzylinders, von wo es durch einen Rückführzweig (10) wieder zur Umwälzpumpe (7) zurückgeführt wird. Die Förderleistung der Umwälzpumpe (7) bleibt konstant. Der Durchsatz der Vorbehandlungseinrichtung wird bestimmt durch die Förderleistung der Pumpe im Brunnen (1) und durch die Einstellung der Drosselventile, die vor und nach der Vorbehandlungseinrichtung angebracht sind.

Die in dem Modul (6) dem umgewälzten Wasser beigemischte ozonhaltige Luft läßt den Wasserstand im Reaktionsgefäß während des Betriebes etwa auf die Höhe des Auslaßstutzens sinken. Weiteres Gas wird durch die Auslaßleitung zum Filter (3) mitgerissen. Der Durchsatz der Vorbehandlungseinrichtung und die Ozonleistung werden so eingestellt, daß unter Berücksichtigung der vorhandenen Rohwasserqualität die gewünschte Reinwasserqualität erreicht wird.

Schwankt die Rohwasserqualität, so kann das Redoxpotential des Reinwassers meßtechnisch erfaßt und durch Änderung des Durchsatzes und/oder der Ozonerzeugerleistung auf einen bestimmten Wert eingeregelt werden.

Die obere Filterschicht (11) des Mischbettfilters (3) besteht aus einem Gemisch von Granulaten verschiedener verkokter Kohlesorten mit einer Körnung von 0,8 bis 1,6 mm. Die mittlere Filterschicht (12) besteht aus Quarzsand mit einer Körnung von 0,3 bis 0,8 mm und über dem Filterboden ist noch eine Grobkiesschicht (13) angebracht. Der Einschluß von Kokskohle schafft das erforderliche reduzierende Milieu, um Ozon restlos zu entfernen, Permanganate zu filtrierbaren Manganoxiden zurückzureduzieren und einen dauerhaften Bewuchs aerober Bakterien zu ermöglichen.

Nach dem Filtern gelangt das Wasser über eine Leitung (14) in die Füllkörpersäule (4). Es rieselt hier über eine Schicht (15) aus Füllkörpern gleicher Art wie die Füllkörper (8) der Vorbehandlungseinrichtung (2). Aus dem unteren Teil der Füllkörpersäule (4) wird das Wasser über ein Steigrohr (16) hochgedrückt und dann dem Lagerbehälter (5) zugeführt.

Infolge der geringeren Strömungsgeschwindigkeit im Mischbettfilter (3) bildet sich in dessen oberem Teil ein Polster aus überschüssigem Ozon-Luft-Gemisch (17) geringer Ozonkonzentration. Über eine Verbindungsleitung (18) wird dieses Gas kurz vor der Füllkörpersäule (4) in die Leitung (14) und dann zusammen mit dem Wasser in den oberen Teil der Füllkörpersäule (4) eingeleitet. Durch Beeinflussung eines in der Leitung (18) enthaltenen Regelventils (19) mittels einer Niveausonde (20) wird der Wasserspiegel im Mischbettfilter (3) konstant gehalten, so daß kein verunreinigtes Wasser in die Leitung (18) eindringen kann.

Das Abgas aus der Füllkörpersäule (4) wird über ein Aktivkohlefilter (21) geführt, welches das im Gas enthaltene Ozon unter Bildung von Kohlendioxid restlos entfernt. Mit Hilfe eines Schwimmerventils (22) kann der Gasabfluß so geregelt werden, daß das Wasserniveau (24) in der Füllkörpersäule (4) auf der gezeichneten Höhe konstant gehalten wird. Bei diesem niedrigen Wasserstand ist die Rieselstrecke und dementsprechend die Kontaktzeit zwischen Wasser und Ozon verhältnismäßig lang. Wahlweise kann anstelle des Schwimmerventils (22) ein höher angeordnetes Schwimmerventil (23) in Betrieb genommen werden. Dadurch wird das Wasserniveau höher gelegt und die Rieselstrecke und Kontaktzeit verkürzt. Somit läßt sich durch Wahl des Wasserniveaus der Effekt der Ozon-Nachbehandlung grob einstellen. Die Feineinstellung erfolgt am Ozonerzeuger.

Zur Rückspülung des Mischbettfilters (3) wird Reinwasser aus dem Lagerbehälter (5) entnommen und mittels einer Rückspülpumpe (27) von unten nach oben durch den Filterbehälter gedrückt. Dazu wird das Ventil (25) in einer vom oberen Anschluß des Mischbettfilters (3) zum Kanal führenden Leitung (26) geöffnet und eine Rückspülpumpe (27) in Betrieb gesetzt. Dadurch schaltet ein 3-Wege-Ventil (28) in der Leitung (14) selbsttätig um. Eine Rückschlagklappe (29) in der Verbindungsleitung von der Oxidationseinrichtung (2) zum Mischbettfilter (3) schließt. Dadurch können die aus der Filtermasse ausgelösten Verunreinigungen durch die Leitung (26) in den Kanal abfließen.

Die Wassergeschwindigkeit beim Rückspülen sollte mit Bedacht eingestellt werden, nämlich so, daß einerseits zwar die Verunreinigungen abgelöst und ausgespült werden, die fest an den Kokskörnern haftenden Bakterienkulturen jedoch weitgehend erhalten bleiben, so daß die biologische Wirkung des Filters bei Inbetriebnahme sofort wieder voll einsetzen kann.

## Ansprüche

1. Wasseraufbereitungssystem mit einer Einrichtung zur intensiven Vorbehandlung des Rohwassers mit Ozon, mit einem anschließenden Filter, bestehend aus einem mit reduzierend wirkenden Filterstoffen teilweise gefüllten Filterbehälter, der von dem vorbehandelten Wasser von oben nach unten durchströmt wird, wobei das in dem Wasser enthaltene restliche Ozon abgebaut wird, und mit einer Einrichtung zur Nachbehandlung des Wassers mit Ozon zum Zwecke der Nachdesinfektion, dadurch gekennzeichnet, daß die im oberen Teil des Filterbehälters sich ansammelnde ozonhaltige Luft (17), deren Ozonanteil dem Wasser bei der Vorbehandlung beigemischt wurde, über eine Entnahmeleitung (18) in die Einrichtung (4) zur Nachbehandlung des gefilterten Wassers eingespeist wird und daß eine Niveauregeleinrichtung für das Wasser in dem Mischbettfilter (3) vorgesehen ist, welche die Entnahmeleitung (18) sperrt, wenn das Wasser über einen bestimmten Niveau-Grenzwert ansteigt, so daß das überschüssige Ozon dem Filterbehälter wasserfrei entnommen wird.

2. Wasseraufbereitungssystem nach Anspruch 1, dadurch gekennzeichnet, daß die Niveauregeleinrichtung ein in die Entnahmeleitung (18) eingebautes Regelventil (19) und eine dieses beeinflussende Niveausonde (20) umfaßt.

3. Wasseraufbereitungssystem nach Anspruch 1, dadurch gekennzeichnet, daß als Einrichtung zur Nachbehandlung des gefilterten Wassers ein längliches Standgefäß (4) vorgesehen ist, welches mit chemisch beständigen, ein geringes Volumen und eine große Oberfläche aufweisenden Füllkörpern (15) gefüllt ist, und daß das gefilterte Wasser oben in das Standgefäß (4) eingeleitet und unten entnommen wird, so daß es über die Füllkörper (15) rieselt, und die ozonhaltige Luft in das Standgefäß (4) eingeleitet und die Abluft über ein Aktivkohlefilter (21) ausgeleitet wird.

4. Wasseraufbereitungssystem nach Anspruch 3, dadurch gekennzeichnet, daß das Wasserniveau (24) in dem Standgefäß (4) mittels eines Niveauregelventils (22), welches die Abluftleitung ab einem bestimmten Wasserniveau sperrt, konstant gehalten wird.

5. Wasseraufbereitungssystem nach Anspruch 1, dadurch gekennzeichnet, daß die Einrichtung (2) zur Vorbehandlung des Rohwassers ein Reaktionsgefäß umfaßt, das im oberen Teil einen Mischer und etwa in halber Höhe einen Auslaß für das zu dem Filterbehälter fließende Wasser-Ozon-Luft-Gemisch aufweist, während das Wasser vom Boden des Reaktionsgefäßes über einen Rückführzweig (10) einer in den Mischer einspeisenden Umwälzpumpe (7) zufließt.

## Claims

1. Water treatment system with a device for the intensive pretreatment of the untreated water with ozone, with a subsequent filter consisting of a filter container which is partially filled with filter substances having a reducing effect and is permeated from top to bottom by the pretreated water, the residual ozone contained in the water being decomposed, and with a device for the after-treatment of the water with ozone for the purpose of subsequent disinfection, characterised in that the ozone-containing air (17) which accumulates in the upper part of the filter container and of which the ozone content has been mixed with the water during the pretreatment is fed via a bleeder line (18) into the device (4) for the after-treatment of the filtered water and in that a level adjusting device for the water is provided in the mixed bed filter (3) and blocks the bleeder line (18) when the water rises above a certain critical level so that the excess ozone can be removed from the filter container without water.

2. Water treatment system according to claim 1, characterised in that the level adjusting device comprises a control valve (19) fitted into the bleeder line (18) and a level probe (20) influencing it.

3. Water treatment system according to claim 1, characterised in that an elongate storage vessel (4) filled with chemically resistant filling bodies (15) having a small volume and a large surface area is provided as a device for the after-treatment of the filtered water and in that the filtered water is introduced into the storage vessel (4) at the top and is removed at the bottom so that it trickles over the filling bodies (15), and the ozone-containing air is introduced into the storage vessel (4) and the outgoing air is discharged via an activated carbon filter (21).

4. Water treatment system according to claim 3, characterised in that the water level (24) in the storage vessel (4) is kept constant by means of a level control valve (22) which blocks the outgoing air line from a certain water level.

5. Water treatment system according to claim 1, characterised in that the device (2) for the pretreatment of the untreated water comprises a reaction vessel which has a mixer in the upper part and an outlet about half-way up for the water/ozone/air mixture flowing to the filter container, while the water flows from the base of the reaction vessel via a return branch (10) to a circulating pump (7) feeding into the mixer.

## Revendications

1. Système de traitement de l'eau comprenant un dispositif pour le traitement préparatoire intensif de l'eau brute par l'ozone, comportant un filtre qui y est raccordé, constitué d'un récipient de filtration partiellement rempli de matières filtrantes à action réductrice, qui est traversé, de haut en bas, par l'eau prétraitée, l'ozone résiduel contenu dans l'eau étant décomposé, et comprenant un dispositif pour le retraitement de l'eau par l'ozone dans le but d'une désinfection subséquente, caractérisé en ce que l'air (17), contenant de l'ozone, s'accumulant dans la partie supérieure du récipient de filtration, dont la part d'ozone a été ajoutée à l'eau lors du traitement préparatoire, est amené dans le dispositif (4) pour le retraitement de l'eau filtrée par un conduit d'évacuation (18), et en ce qu'un dispositif de réglage de niveau pour l'eau est prévu dans le filtre (3), lequel ferme le conduit d'évacuation (18) quand l'eau dépasse un seuil de niveau déterminé, de sorte que l'ozone en excès est évacué du récipient de filtration sans eau.

2. Système de traitement de l'eau selon la revendication 1, caractérisé en ce que le dispositif de réglage de niveau comporte une soupape de réglage (19) montée dans le conduit d'évacuation (18) et une sonde de niveau (20) commandant celle-ci.

3. Système de traitement de l'eau selon la revendication 1, caractérisé en ce que, en tant que dispositif pour le retraitement de l'eau filtrée, est prévu un récipient allongé vertical (4), qui est rempli de corps de remplissage (15), chimiquement stables, présentant un faible volume et une grande surface, et en ce que l'eau filtrée est introduite par le haut dans le récipient (4) et soutirée par le bas, de sorte qu'elle ruisselle sur les corps de remplissage (15), et l'air contenant de l'ozone est introduit dans le récipient (4) et l'air sortant est évacué via un filtre au charbon actif (21).

4. Système de traitement de l'eau selon la revendication 3, caractérisé en ce que le niveau d'eau (24) dans le récipient vertical (4) est maintenu constant au moyen d'une soupape de réglage de niveau (22), qui ferme le conduit d'air sortant à partir d'un niveau d'eau déterminé.

5. Système de traitement de l'eau selon la revendication 1, caractérisé en ce que le dispositif (2) pour le traitement préparatoire de l'eau brute comporte un réacteur, qui présente, dans sa partie supérieure, un mélangeur et, à peu près à mi-hauteur, une sortie pour le mélange air-ozone-eau s'écoulant vers le récipient de filtration, tandis que l'eau arrive du fond du réacteur, par une dérivation de recyclage (10), à une pompe de circulation (7) alimentant le mélangeur.